Europäisches Patentamt

European Patent Office

Office européen des brevets

(19)

(11) Publication number: **0 170 635**
A1

(12)

# EUROPEAN PATENT APPLICATION

(21) Application number: **85830176.5**

(22) Date of filing: **09.07.85**

(51) Int. Cl.⁴: **A 01 D 34/67**
**A 01 D 34/63, A 01 D 34/00**

(30) Priority: **31.07.84 IT 4007084**

(43) Date of publication of application:
**05.02.86 Bulletin 86/6**

(84) Designated Contracting States:
**AT BE CH DE FR GB LI NL SE**

(71) Applicant: **Officine Meccaniche BEDOGNI & C. S.r.L.**
**Viale Dell'Industria Corte Teggie**
**I-42025 Cavriago R.E.(IT)**

(72) Inventor: **Bedogni, Rino**
**Via Mascagni, 36**
**I-42100 Reggio Emilia(IT)**

(74) Representative: **Bonfreschi, Mario**
**Bugnion S.p.A. Viale Trento Trieste, 25**
**I-41100 Modena(IT)**

(54) **Swivel handlebar, in particular for power lawn mowers.**

(57) The invention relates to a swivel handlebar, intended in particular for power lawn mowers, which comprises a shaft (4) anchored to the body of the mower (1) in such a way as to permit of being set in a number of distinct positions relative to the mower itself. A device (9) controlled from a lever at the grip (3) of the handlebar locks and releases the shaft (4) into and from the different relative positions.

FIG2

EP 0 170 635 A1

## Swivel handlebar, in particular for power lawn mowers

The invention relates to a swivel handlebar, intended in particular for power lawn mowers.

Power lawn mowers of a conventional type have a handlebar, incorporating either one or two shafts, which in certain conditions prevents the machine from operating; that is to say, it is the very position of the handlebar and the grip that disallows mowing of the grass beneath hedges and low shrubbery or plants. At all events, use of the mower is rendered difficult where available headroom is so low as to admit passage of the mower itself, and nothing more.

The invention described herein sets out to solve the problem thus outlined, thereby eliminating the drawbacks and limitations of use which beset power lawn mowers of a general conventional type.

A swivel handlebar is disclosed, intended in particular for power lawn mowers, comprising at least one shaft that connects the grip of the handlebar with the mower and is anchored to the body of the mower in such a way as to permit of being set in a number of distinct positions relative thereto.

A preferred embodiment of the invention will now be described, by way of example, with the aid of the accompanying drawings, in which:

-fig 1 is a schematic representation of the invention, viewing from the front;

-fig 2 is the plan of fig 1 from above;

-fig 3 shows a detail of the section through II-II in fig 2, on enlarged scale;

-fig 4 shows a view from above of the circular plate with its locking holes.

With reference to the drawings, 1 denotes a power lawn mower provided with a swivel handlebar 2.

The handlebar 2 incorporates a grip 3, and a shaft 4 that furnishes the connection between the grip and the mower proper. The shaft 4 is angled relative to the horizontal and associated with the body of the mower 1 in such a way as to permit of its being set in a number of distinct positions, in relation to the mower itself. More exactly, the base of the handlebar shaft 4 is planted in the mower such as to turn, i.e. swivel, about a vertical axis, the bottom end being integral with a swivel-pin 5 which is seated, rotatably, in a cylindrical socket 6 disposed with axis vertical and forming part of the mower body. The swivel-pin 5 is disallowed movement in an axial direction relative to the socket 6, being held fast by a pin, for instance, or a screw 7, which projects radially into the cylindrical socket 6 in order to locate in a circumferential groove 8 offered by the pin.

The handlebar incorporates a device 9, embodied integral with the swivel-pin 5 and operated from the grip 3, which is designed to permit of locking and releasing the handlebar into and from a given position relative to the mower 1. The device 9 incorporates a catch mechanism consisting of a pin 10 which can be located in any one of a number of holes 11 provided in a circular plate embodied integral and coaxial with the top of the cylindrical socket 6.

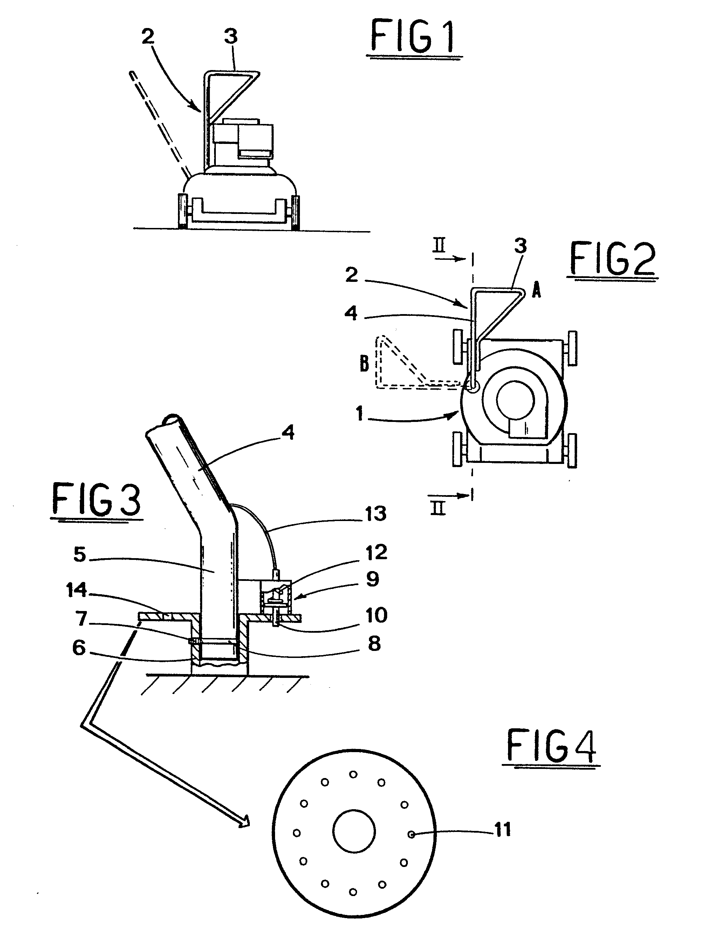

The pin 10 is urged against the circular plate, and more to the point, urged into the single hole 11, by the agency of a spring 12 loaded between the pin itself and the base of the shaft 4, and can be pulled so as to withdraw completely from the hole 11 that it occupies at a given moment by way of control means 13 consisting, say, of a cable and sheath (as in fig 3) operated from a lever mounted to the grip 3. Working such a lever, a pulling effort can be applied at the pin 10 of sufficient force to overcome the downward force exerted by the spring 12, so as to withdraw the pin from the hole 11 and raise it above the level of the circular plate, thereby allowing the swivel-pin 5, hence the entire handlebar assembly, to turn in the cylindrical socket 6 about a vertical axis. In this state, the handlebar 2 can be swivelled freely so as to bring it into the required position, whereupon release of the control means will re-lock the shaft to the mower 1 by causing the pin 10 to locate in one of the holes 11, urged downwards by the spring 12.

Rotation of the handlebar 2 about the vertical axis of the swivel-pin 5 is illustrated to advantage in fig 2.

The fact of being able to swivel the handlebar and offset it to one side of the mower is instrumental in allowing the mower access to areas with limited headroom, where the handlebar itself would otherwise obstruct such access. In such situations, the operator can swing the handlebar into position B, for example, and walk forward alongside the mower 1 without any difficulty. Where there is no such requirement for the mower's gaining access to areas with limited headroom, the handlebar 2 can be returned the normal position A in which the operator walks forward behind the mower, rather than alongside.

Practical application of the invention may be seen to be abundantly simple; the operator has direct control at any given moment by virtue of the fact that the lever which operates the device 9 for locking and release of the pin 10 into and from the holes 11 is mounted to the handlebar grip 3.

Claims

1) A swivel handlebar, in particular for power lawn mowers, characterised in that it has at least one shaft (4) by way of which the grip (3) of the handlebar (2) is connected with the mower (1), and in that the handlebar shaft is anchored to the body of the mower in such a way as to permit of being set in a number of distinct positions relative thereto.

2) Handlebar as in claim 1 wherein the base of the shaft (4) is hinged to the body of the mower (1) in such a way as to swivel on a vertical axis; and wherein a device (9) controlled from the grip (3) of the handlebar permits of locking and releasing the shaft (4) into and from a number of distinct positions.

3) Handlebar as in claims 1 & 2 wherein the base of the shaft (4) is integral with a swivel-pin (5) planted rotatably in a cylindrical socket (6) disposed with axis vertical and forming part of the body of the mower (1); and wherein relative axial movement of the swivel-pin (5) and the socket (6) is disallowed.

4)   A lawn mower as in preceding claims, characterised

-in that the device (9) incorporates a catch mechanism consisting of a pin (10) which can be located in any one of a number of holes (11) provided in a circular plate embodied integral and coaxial with the top of the cylindrical socket (6), such a pin (10) being urged into a single hole (11) by the agency of a spring (12) loaded between the pin itself and the base of the shaft (4); and,

-in that the pin (10) can be pulled, so as to withdraw completely from the hole (11) that it occupies at a given moment, by way of control means (13) consisting of a cable and sheath operated from a lever mounted to the handlebar grip (3) which will apply pulling effort of sufficient force to overcome the force exerted by the spring (12).

1|1

FIG 1

FIG 2

FIG 3

FIG 4

**DOCUMENTS CONSIDERED TO BE RELEVANT**

EP 85830176.5

| Category | Citation of document with indication, where appropriate, of relevant passages | Relevant to claim | CLASSIFICATION OF THE APPLICATION (Int Cl 4) |
|---|---|---|---|
| X | DE - C - 2 023 254 (MASCHINENFABRIK BACKERS & GILBERS GMBH & CO KG) | 1,2 | A 01 D 34/67 |
| A | * Totality * | 3 | A 01 D 34/63 |
| | -- | | A 01 D 34/00 |
| A | US - A - 3 465 505 (ALVERN J.KRINKE) | 1,2,4 | |
| | * Totality * | | |
| | -- | | |
| A | EP - A1 - 0 005 540 (WOLF-GERÄTE GMBH) | 1 | |
| | * Totality * | | |
| | ---- | | |

| TECHNICAL FIELDS SEARCHED (Int Cl 4) |
|---|
| A 01 D 34/00 |

The present search report has been drawn up for all claims

| Place of search | Date of completion of the search | Examiner |
|---|---|---|
| VIENNA | 11-10-1985 | MENTLER |